# EUROPÄISCHE PATENTSCHRIFT

(11) **EP 2 529 965 B1**
(45) Veröffentlichungstag und Bekanntmachung des Hinweises auf die Patenterteilung: **12.03.2014**
(21) Anmeldenummer: 11004495.5
(22) Anmeldetag: 01.06.2011
(51) Int. Cl.: B60J 7/00

(54) **Rollo für ein Schiebedachsystem**
Roller blind for a sliding roof system
Store à enrouleur pour système de toit coulissant

(43) Veröffentlichungstag der Anmeldung: 05.12.2012
(73) Patentinhaber: Roof Systems Germany GmbH, 63128 Dietzenbach (DE)
(72) Erfinder: Grimm, Rainer, 60598 Frankfurt am Main (DE); Biewer, Christian, 64839 Altheim (DE); Rieger, Peter, 63739 Aschaffenburg (DE); Lücke, Georg, 63128 Dietzenbach (DE); Boehm, Horst, 60599 Frankfurt (DE)
(74) Vertreter: Sties, Jochen

(56) Entgegenhaltungen:
- EP-A1- 1 900 560
- EP-A2- 1 584 509
- EP-A2- 1 744 010
- DE-B3-102005 048 207
- FR-A1- 2 932 123

## Beschreibung

Die Erfindung betrifft ein Rollo für ein Schiebedachsystem, mit einem flexiblen Material, das zumindest teilweise eine Dachöffnung abdecken kann, sowie zwei Spiralfedern, die sich in einer Längsrichtung des Rollos erstrecken, mit den Längsrändern des flexiblen Materials fest verbunden sind und sich zu einer Spirale zusammenzuziehen suchen.

Ein solches Rollo ist bereits aus der gattungsgemäßen EP 1 584 509 A2 bekannt, wobei die Spiralfedern unmittelbar auf das flexible Material des Rollos einwirken und denjenigen Abschnitt, der sich nicht in längsgerichteten Führungsschienen befindet, automatisch zu einem Wickel zusammenrollen. Auf den Abschnitt des Rollos, der sich in den Führungsschienen befindet, wirkt hingegen nur eine sehr geringe Zugkraft ein. Außerdem führt die Vorspannung der Spiralfedern dazu, dass diese innerhalb der Führungsschienen eine vergleichsweise hohe Reibung erzeugen. Dadurch wird zuverlässig verhindert, dass sich das Rollo in unerwünschter Weise von allein verstellt.

Gemäß der EP 1 584 509 A2 ersetzen die beiden Spiralfedern eine herkömmliche Aufwickelfeder, welche auf eine Wickelachse des Rollos wirkt. Problematisch an einer solchen Aufwickelfeder ist deren Dimensionierung, da die Feder einerseits stark genug sein muss, um das Rollo aus jeder Stellung zuverlässig aufwickeln zu können, andererseits aber das Rollo, wenn es vom Benutzer in eine gewünschte Stellung gebracht wurde, nicht von alleine verstellen darf. Im Hinblick auf eine Alterung der Aufwickelfeder, die unterschiedlichen Reibungsverhältnisse, welche über die Lebensdauer des Rollos auftreten können, sowie die unterschiedlichen Federkräfte, welche bei vollständig von der Wickelachse abgezogenem Rollo einerseits und nahezu vollständig aufgewickeltem Rollo andererseits wirken, lassen sich die beiden genannten Anforderungen an die Aufwickelfeder nur mit großem Aufwand erfüllen.

Um ein starkes Durchhängen des Rollos zu verhindern, ist es bereits aus dem Stand der Technik bekannt, das flexible Material durch Spannvorrichtungen in Querrichtung, d.h. quer zur Verschieberichtung des Rollos, mit einer Zugkraft zu beaufschlagen. Dies ist aber nicht unter allen Umständen ausreichend, um das Rollo in der gewünschten Weise gespannt zu halten.

Die DE 10 2005 048 207 B3 zeigt eine Rolloanordnung für ein Kraftfahrzeug, mit einer aus einem textilen Gewebe gefertigten Rollobahn, die in Fahrzeuglängsrichtung ausgezogen werden kann. Die Rollobahn ist an einem Ende an einem Wickelrohr einer Wickelwelle fixiert und auf dieses aufwickelbar bzw. von diesem abwickelbar. Das Wickelrohr ist mittels einer bereits oben erwähnten, herkömmlichen Wickelfeder in Aufwickelrichtung vorgespannt, wobei diese Aufwickelfeder zwischen einer Lagerachse der Wickelwelle und dem Wickelrohr eingespannt ist. An ihren seitlichen Rändern ist die Rollobahn in Führungsschienen geführt und somit über ihre gesamte Ausziehlänge in Querrichtung gespannt gehalten. Hierzu weist die Rollobahn im Bereich ihrer seitlichen Ränder jeweils ein metallisches flexibles Führungsband auf, das in einer Führungsbahn der jeweiligen Führungsschiene geführt ist. Die Führungsbänder sind auf die Rollobahn aufgeklebt oder jeweils in eine Tasche eingenäht oder eingeklebt, die durch Umlegen eines seitlichen Randbereichs der Rollobahn gebildet ist.

Aufgabe der Erfindung ist die Schaffung eines Rollos für ein Schiebedachsystem, bei dem auf einfache Art und Weise die oben beschriebenen Probleme herkömmlicher Aufwickelfedern überwunden und gleichzeitig das Rollo straff gehalten werden kann.

Erfindungsgemäß wird diese Aufgabe gelöst durch ein Rollo der eingangs genannten Art, bei dem eine federbeaufschlagte Wickelwelle vorgesehen ist, die sich quer zur Längsrichtung durchgängig von einem Längsrand des flexiblen Materials zu einem entgegengesetzten Längsrand des flexiblen Materials erstreckt und mit einem Querrand des flexiblen Materials fest verbunden ist. Die Erfindung beruht auf der Erkenntnis, dass auch in Längsrichtung, d.h. in Verschieberichtung des Rollos, eine gewisse Zugkraft hilfreich ist, um das flexible Material zu straffen und somit dessen Durchhang zu reduzieren. Da das Aufwickeln des Rollos bereits durch die Spiralfedern gewährleistet wird, reicht jedoch eine geringe Zugkraft aus, so dass nur eine schwache Federbeaufschlagung der Wickelwelle notwendig ist. Über diese Federbeaufschlagung der Wickelwelle wird nämlich nicht das Aufrollen des Rollos, sondern lediglich eine Straffung des flexiblen Materials in Längsrichtung sichergestellt, um den Durchhang des flexiblen Materials zu minimieren.

Vorzugsweise dienen die Spiralfedern auch der Führung des Rollos in einer Führungsschiene. Auf diese Weise kann auf die sonst zur Führung des Rollos verwendeten Elemente, z.B. Keder, Randwulst oder Führungsleiste, verzichtet werden.

In einer Ausführungsform des Rollos ist die Wickelwelle eine Hohlwelle und umgibt eine starre Lagerachse. Durch diese Konstruktion werden die Funktionen der Rollo-Lagerung (z.B. an einer Fahrzeugkarosserie) und der Auf- oder Abwicklung des flexiblen Materials in einfacher und vorteilhafter Weise auf zwei unterschiedliche Bauelemente verteilt.

Im Übrigen kann zwischen der Lagerachse und der Wickelwelle ein Schrumpfschlauch aus Kunststoff vorgesehen sein. Gewöhnlich überzieht dieser optionale Schrumpfschlauch unmittelbar die starre Lagerachse, um bei einer Rotation der Wickelwelle relativ zur starren Lagerachse eine unerwünschte Geräuschentwicklung zu verhindern.

Besonders bevorzugt ist zudem ein Federelement vorgesehen, welches die Wickelwelle relativ zur Lagerachse in Umfangsrichtung beaufschlagt.

Dieses Federelement kann insbesondere eine Schraubenfeder sein, die sich zwischen der Wickelwelle und der Lagerachse erstreckt, wobei die Wickelwelle und die Lagerachse jeweils drehfest mit einem axialen Federende der Schraubenfeder verbunden sind. Diese Konstruktion mit konzentrisch angeordneter Lagerachse, Schraubenfeder und hohler Wickelwelle ist äußerst kompakt und schützt das Federelement zuverlässig gegen äußere Einflüsse.

Vorzugsweise erstreckt sich das Federelement in einer Querrichtung des Rollos im Wesentlichen über die gesamte Länge der Wickelwelle. Infolge dieser großen Federlänge weist die Schraubenfeder eine Vielzahl von Wicklungen auf, insbesondere wenigstens 50 Wicklungen. Die vom Federelement in Längsrichtung aufgebrachte Straffkraft ist daher unabhängig von der Position des Rollos, d.h. der Menge des abgewickelten, flexiblen Materials, annähernd konstant.

In einer weiteren Ausführungsform ist die Wickelwelle ein Wellrohr und die Lagerachse ein bogenförmig gekrümmtes Metallrohr. Dadurch lässt sich das Rollo, mit geringem Aufwand an eine vorgegebene Krümmung, beispielsweise an die Krümmung eines Fahrzeugdachs, anpassen. Das bogenförmig gekrümmte Metallrohr ist bevorzugt ein stabiles Stahlrohr, an dessen Krümmung sich die Schraubenfeder und das Wellrohr flexibel anpassen. Das Wellrohr ist in der Regel aus einem Kunststoff hergestellt und in einer Rohrlängsrichtung flexibel, aber weitgehend torsionssteif.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 eine perspektivische Ansicht eines Fahrzeugdaches mit einem erfindungsgemäßen Rollo;
- Figur 2 eine perspektivische Explosionsansicht eines erfindungsgemäßen Rollos;
- Figur 3 eine Lagerachse des Rollos aus Figur 2 gemäß einer alternativen Ausführungsvariante;
- Figur 4 einen Detailschnitt des erfindungsgemäßen Rollos in Querrichtung;
- Figur 5 einen Schnitt V-V durch das Rollo gemäß Figur 4;
- Figur 6 einen Schnitt VI-VI durch das Rollo gemäß Figur 4;
- Figur 7 einen Detailschnitt des erfindungsgemäßen Rollos in Querrichtung;
- Figur 8 einen Schnitt VIII-VIII durch das Rollo gemäß Figur 7;
- Figur 9 einen Schnitt IX-IX durch das Rollo gemäß Figur 7; und
- Figur 10 einen Schnitt X-X durch das Rollo gemäß Figur 7.

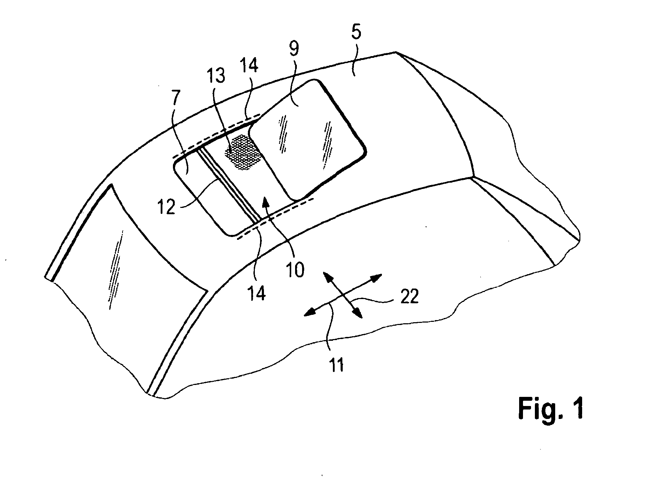

In Figur 1 ist ein Fahrzeugdach 5 dargestellt, welches mit einer Öffnung 7 versehen ist. Der Öffnung 7 ist ein Deckel 9 eines Schiebedachsystems zugeordnet, wobei dieser Deckel 9 zwischen einer geschlossenen Stellung, in welcher er die Öffnung 7 verschließt, und einer in Figur 1 gezeigten, geöffneten Stellung verstellt werden kann. Unterhalb des Deckels 9 und auch unterhalb der Öffnung 7 ist ein Rollo 10 angeordnet. Das Rollo 10 kann, bezogen auf das Fahrzeug, in einer Längsrichtung 11 nach vorne und hinten verschoben werden. Wenn das Rollo 10 vollständig nach hinten geschoben wird, ist die Öffnung 7 vollständig freigegeben. Frischluft und Sonnenlicht haben dann freien Zugang zum Fahrzeuginnenraum. Wenn das Rollo 10 vollständig nach vorne geschoben wird, ist die Öffnung 7 vom Rollo 10 abgedeckt. Frischluft und Sonnenlicht können somit nur in begrenztem Umfang in den Fahrzeuginnenraum gelangen.

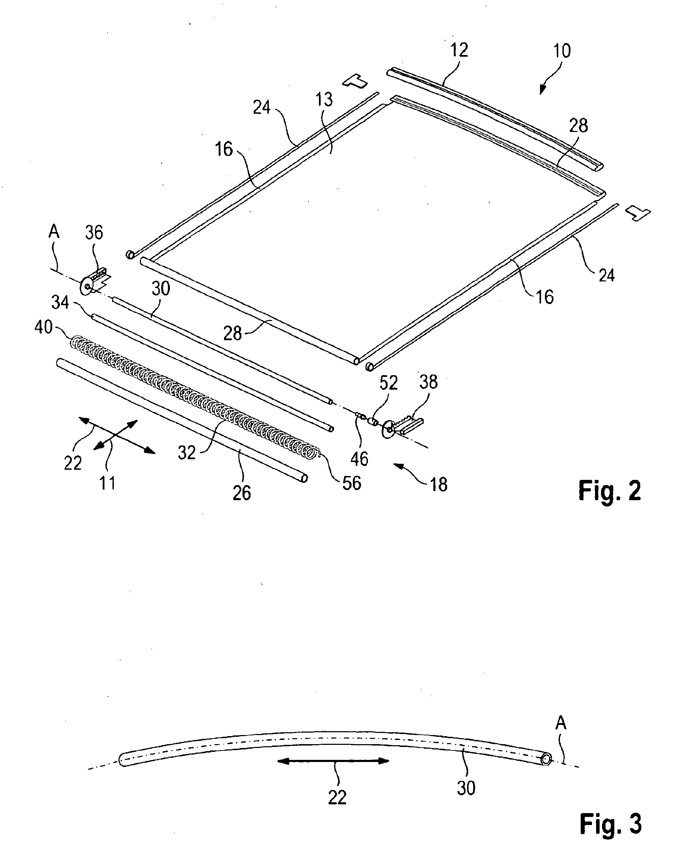

Das Rollo 10 weist ein flexibles Material 13, beispielsweise einen Stoff oder eine Kunststofffolie auf. An seinem vorderen Rand ist ein Spriegel 12 vorgesehen, an dem ein Fahrzeuginsasse angreifen kann, um das flexible Material 13 nach vorne oder hinten zu verschieben. In einer alternativen Ausführungsvariante ist das Rollo elektrisch verstellbar, wobei der Fahrzeuginsasse lediglich einen Schalter betätigen muss, um das flexible Material 13 auf- oder abzuwickeln. Seitlich entlang der Öffnung 7 erstrecken sich zwei Führungsschienen 14, in denen zwei Längsränder 16 des flexiblen Materials 13, also in Längsrichtung 11 des Fahrzeugs betrachtet der rechte und der linke Rand des Rollos 10, aufgenommen sind. Im Bereich des hinteren Endes der Öffnung 7 befindet sich eine Straffvorrichtung 18, wie sie in der Explosionsansicht des Rollos 10 gemäß Figur 2 gut zu erkennen ist.

Gemäß Figur 2 umfasst das Rollo 10 außer dem flexiblen Material 13 zwei Spiralfedern 24, die sich in Längsrichtung 11 des Rollos 10 erstrecken, mit den Längsrändern 16 des flexiblen Materials 13 fest verbunden sind und sich zu einer Spirale zusammenzuziehen suchen.

Die Spiralfedern 24 sind im vorliegenden Fall Stahlbänder, welche in den Führungsschienen 14 längsverschieblich geführt sind und neben der Aufwicklung des flexiblen Materials 13 gleichzeitig auch der Führung des Rollos 10 in Längsrichtung 11 dienen. Über die Stahlbänder und die Führungsschienen 14 lässt sich das Rollo 10, konkret das flexible Material 13 des Rollos 10, zudem auch in einer Querrichtung 22 vorspannen.

Im dargestellten Ausführungsbeispiel sind die Spiralfedern 24 dünne Metallstreifen aus Federblech und im zusammengebauten Zustand des Rollos 10 beispielsweise mit dem flexiblen Material 13 verklebt.

Die beiden Spiralfedern 24 sind dabei so vorgespannt, dass sie sich selbsttätig aufrollen und bereits ohne Verwendung weiterer Federn einen zuverlässigen Betrieb sowie eine gewünschte Betätigung des Rollos 10 gewährleisten.

Darüber hinaus sind die beiden Spiralfedern 24 bevorzugt so vorgespannt, dass sie, wenn sie sich außerhalb der Führungsschienen 14 befinden und kein flexibles Material 13 zwischen ihnen vorhanden wäre, jeweils zu einer Spirale zusammenziehen würden, deren Spitzen voneinander abgewandt sind. Dies gewährleistet, dass der von den Spiralfedern 24 erzeugte Materialwickel in Querrichtung 22 straff gespannt gehalten wird.

Die genaue Funktionsweise sowie vorteilhafte Konstruktionsdetails derartiger, mit Spiralfedern 24 ausgestatteter Rollos 10 sind bereits aus der EP 1 584 509 A2 bekannt, auf deren Inhalt in diesem Zusammenhang explizit und vollumfänglich Bezug genommen wird.

Das Rollo 10 in Figur 2 umfasst desweiteren eine federbeaufschlagte Wickelwelle 26, die sich quer zur Längsrichtung 11 erstreckt und mit einem Querrand 28 des flexiblen Materials 13 fest verbunden, insbesondere verklebt ist.

Außer der Wickelwelle 26 ist noch eine starre Lagerachse 30 sowie ein Federelement 32 vorgesehen, welches die Wickelwelle 26 relativ zur Lagerachse 30 in Umfangsrichtung so beaufschlagt, dass das flexible Material 13 auf die Wickelwelle 26 aufgerollt wird. Die Lagerachse 30 ist z.B. ein Metallrohr, insbesondere ein Stahlrohr, welches sich längs einer Rohrachse A erstreckt.

In Figur 2 ist darüber hinaus noch ein optionaler Schrumpfschlauch 34 aus Kunststoff dargestellt, der eine Geräuschentwicklung zwischen der Lagerachse 30 und dem Federelement 32 beim Aufwickeln oder Abwickeln des flexiblen Materials 13 dämpft.

In einer besonders bevorzugten Ausführungsvariante des Rollos 10 ist die Wickelwelle 26 ein Wellrohr und die Lagerachse 30 ein bogenförmig gekrümmtes Metallrohr, wie es in Figur 3 schematisch dargestellt ist. Das vorzugsweise aus Stahl hergestellte Metallrohr wird beispielsweise der bogenförmigen Krümmung des Fahrzeugdachs 5 in Querrichtung 22 angepasst, sodass das Rollo 10 mit geringem Platzbedarf auf der Innenseite des Fahrzeugdachs 5 montiert werden kann. Die bogenförmig gekrümmte Lagerachse 30 aus Stahl erstreckt sich im montierten Zustand in Querrichtung 22 parallel zum Fahrzeugdach 5 und ist über axial angeordnete Montageelemente 36, 38 starr am Fahrzeugdach 5 oder an den Führungsschienen 14 befestigt.

Das als Schraubenfeder ausgebildete Federelement 32 sowie die als Wellrohr ausgebildete Wickelwelle 26 sind in Rohr- bzw. Wellenlängsrichtung, d.h. also in Querrichtung 22 des Fahrzeugs, flexibel und passen sich daher der Krümmung des Stahlrohrs an. Damit ist auf einfache Art und Weise ein platzsparendes Auf- und Abrollen des flexiblen Materials 13 auf die bzw. von der gekrümmten Wickelwelle 26 möglich.

Die Lagerachse 30 mit den Montageelementen 36, 38, der optionale Schrumpfschlauch 34, das als Schraubenfeder ausgebildete Federelement 32 und die Wickelwelle 26 bilden zusammen die Straffvorrichtung 18, welche durch eine dauerhafte Vorspannung des flexiblen Materials 13 in Längsrichtung 11 dessen Durchhang verringert. Da die zuverlässige Aufwicklung des flexiblen Materials 13 bereits durch die Spiralfedern 24 sichergestellt ist, kann das Federelement 32 deutlich schwächer ausgebildet sein als herkömmliche Aufwickelfedern, so dass eine unerwünschte Verstellung des Rollos 10 alleine durch das Federelement 32 ausgeschlossen ist. Insbesondere ist eine Straffkraft des Federelements 32 in Aufwickelrichtung so gering, dass das Federelement 32 ohne die Spiralfedern 24 das Rollo 10 nicht aus jeder Stellung zuverlässig aufwickeln könnte.

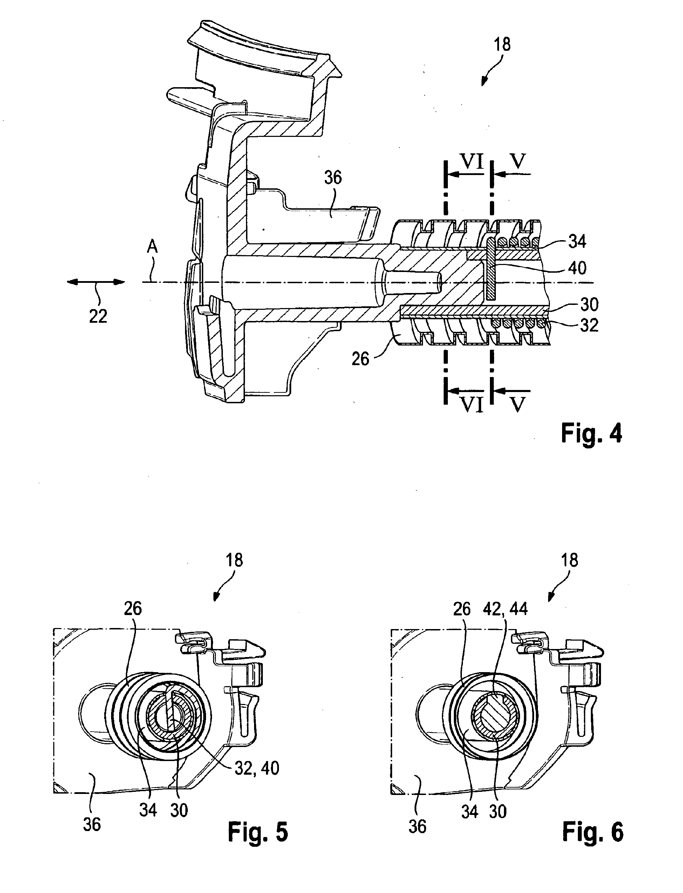

Konstruktive Einzelheiten einer vorteilhaften Ausführungsform des Rollos 10 sind in den Figuren 4 bis 10 anhand verschiedener Schnittdetails im Bereich der axialen Enden der zusammengebauten Straffvorrichtung 18 dargestellt.

So zeigt die Figur 4 einen Schnitt in Querrichtung 22 der Straffvorrichtung 18 im Bereich eines linken Montageelements 36. Hierbei wird deutlich, dass die Wickelwelle 26 eine Hohlwelle ist und die starre Lagerachse 30 umgibt. Darüber hinaus ist am rechten Rand der Figur 4 das Federelement 32 zu erkennen, wobei das Federelement 32 eine Schraubenfeder ist, die sich zwischen der Wickelwelle 26 und der Lagerachse 30 erstreckt.

Im vorliegenden Ausführungsbeispiel ist zwischen der Lagerachse 30 und der Schraubenfeder außerdem der Schrumpfschlauch 34 aus schalldämpfendem Kunststoff vorgesehen, um insbesondere bei Vibrationen im Fahrzeugbetrieb unerwünschte Klappergeräusche zwischen der (metallenen) Lagerachse 30 und dem (metallenen) Federelement 32 zu dämpfen.

Die Figur 5 zeigt einen Schnitt V-V der Straffvorrichtung 18 gemäß Figur 4 und stellt ein abgebogenes axiales Ende 40 der Schraubenfeder dar, welches in eine Öffnung der Lagerachse 30 eingreift, um das Federelement 32 drehfest mit der Lagerachse zu verbinden.

Die Figur 6 zeigt die Straffvorrichtung 18 gemäß Figur 4 in einem Schnitt VI-VI und verdeutlicht die drehfeste Anbindung zwischen der Lagerachse 30 und dem Montageelement 36. Hierzu greift ein radialer Vorsprung 42 des Montageelements 36 in einen Schlitz 44 der Lagerachse 30 ein.

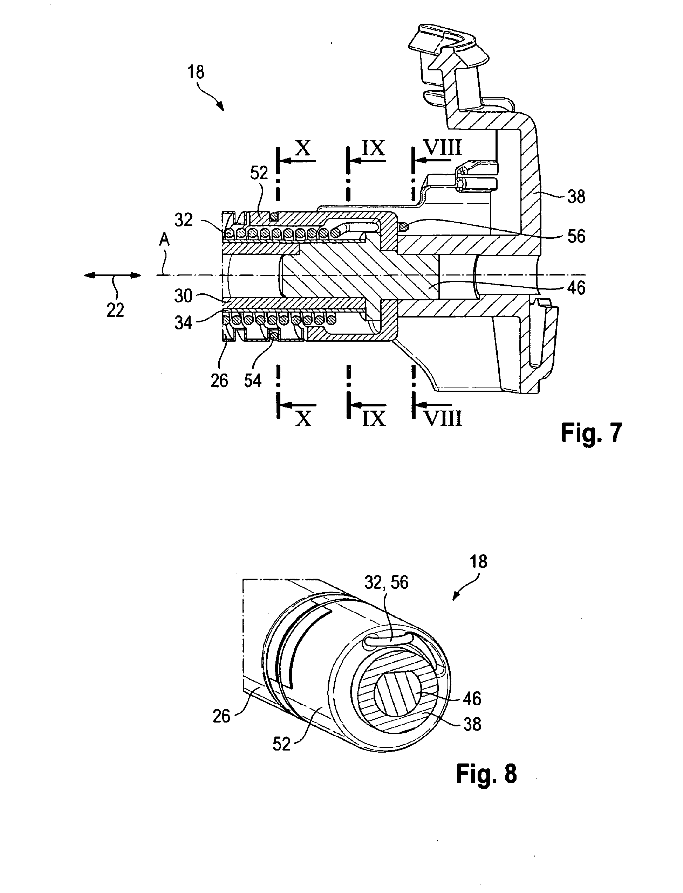

In Figur 7 ist ein Schnitt in Querrichtung 22 der Straffvorrichtung 18 im Bereich eines rechten Montageelements 38 des Rollos 10 dargestellt, und die Figuren 8 bis 10 zeigen Schnitte VIII-VIII, IX-IX und X-X der Straffvorrichtung 18 gemäß Figur 7.

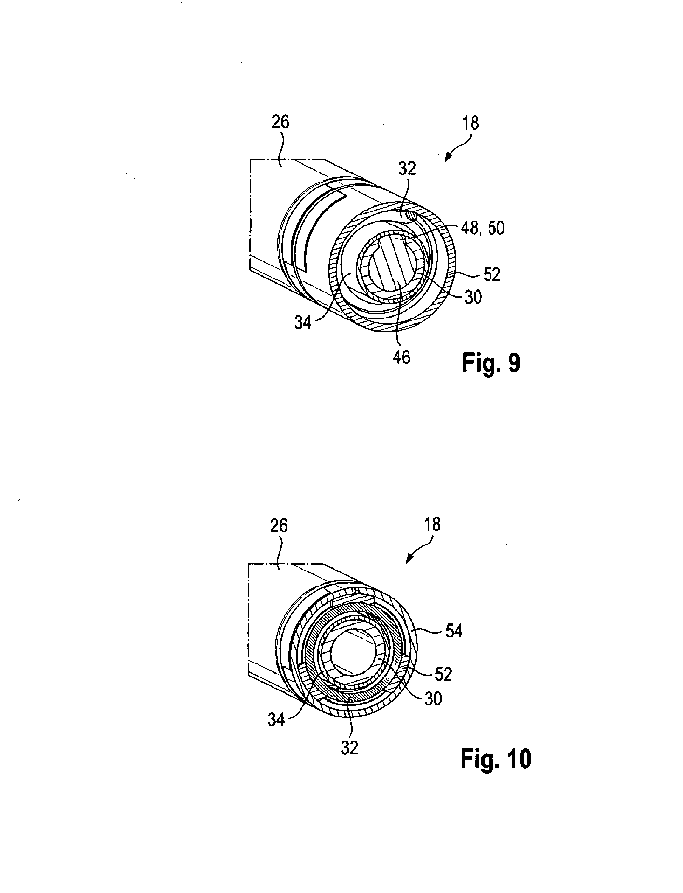

In den Schnitten ist ein Verbindungsstück 46 zu sehen, welches sowohl mit dem Montageelement 38 (vgl. Figur 8) als auch mit der Lagerachse 30 (vgl. Figur 9) verbunden ist. Analog zum Montageelement 36 in Figur 6 weist hier das Verbindungsstück 46 einen radialen Vorsprung 48 auf, der in einen Schlitz 50 der Lagerachse 30 eingreift. An einem dem Montageelement 38 zugewandten axialen Ende des Verbindungsstücks 46 ist eine kreissegmentförmige Aussparung vorgesehen, in die das Montageelement 38 formschlüssig eingreift. Somit ist die Lagerachse 30 über das Verbindungsstück 46 drehfest mit dem Montageelement 38 gekoppelt.

Desweiteren ist eine Lagerhülse 52 vorgesehen, die mit der Wickelwelle 26 drehfest verbunden ist. Hierzu sind an einander zugewandten axialen Enden der Wickelwelle 26 und der Lagerhülse 52 komplementäre Verzahnungen vorgesehen, die formschlüssig ineinander greifen (siehe insbesondere Figuren 8 bis 10). Im Bereich dieser ineinandergreifenden Verzahnungen ist ferner ein Spannring 54 vorgesehen, der eine axiale Relativbewegung zwischen der Lagerhülse 52 und der Wickelwelle 26 verhindert und damit deren drehfeste Kopplung sicherstellt.

Ein der Lagerhülse 52 zugewandtes axiales Ende 56 der Schraubenfeder ist hakenförmig ausgebildet und gemäß Figur 8 drehstarr in der Lagerhülse 52 verankert, wodurch das Ende 56 der Schraubenfeder über die Lagerhülse 52 drehfest mit der Wickelwelle 26 gekoppelt ist.

Die Wickelwelle 26 und die Lagerachse 30 sind folglich jeweils mit einem axialen Ende 40, 56 der Schraubenfeder verbunden. Bei einer Verdrehung der Wickelwelle 26 relativ zur starren Lagerachse 30 wird die Schraubenfeder tordiert und beaufschlagt die Wickelwelle 26 in Umfangsrichtung so, dass das mit der Wickelwelle 26 verbundene, flexible Material 13 aufgewickelt wird. Aufgrund der in Längsrichtung 11 auf das flexible Material 13 wirkenden Zugkraft des Federelements 32 wird dessen Durchhang auf einfache und vorteilhafte Weise verringert.

Gemäß Figur 2 erstreckt sich die Schraubenfeder im Wesentlichen über die gesamte Länge der Lagerachse 30 und der Wickelwelle 26, d.h. über wenigstens 80%, vorzugsweise wenigstens 90% der Abmessung des Rollos 10 in Querrichtung 22 und weist wenigstens 50 Federwicklungen, vorzugsweise wenigstens 100 Federwicklungen auf. Die Anzahl der Federwicklungen ist dabei wenigstens fünfmal, vorzugsweise wenigstens zehnmal so groß wie die Anzahl der Umdrehungen der Wickelwelle 26 zwischen einem vollkommen abgewickelten und einem vollkommen aufgewickelten Zustand des flexiblen Materials 13. Diese große Federlänge und die entsprechend große Anzahl der Federwicklungen tragen dazu bei, dass die Straffkraft des Federelements 32 über den gesamten genutzten Federweg annähernd konstant bleibt.

## Patentansprüche

1. Rollo für ein Schiebedachsystem, mit
einem flexiblen Material (13), das zumindest teilweise eine Dachöffnung (7) abdecken kann, sowie
zwei Spiralfedern (24), die sich in einer Längsrichtung (11) des Rollos (10) erstrecken, mit den Längsrändern (16) des flexiblen Materials (13) fest verbunden sind und sich zu einer Spirale zusammenzuziehen suchen,
**dadurch gekennzeichnet, dass** eine federbeaufschlagte Wickelwelle (26) vorgesehen ist, die sich quer zur Längsrichtung (11) durchgängig von einem Längsrand (16) des flexiblen Materials (13) zu einem entgegengesetzten Längsrand (16) des flexiblen Materials (13) erstreckt und mit einem Querrand (28) des flexiblen Materials (13) fest verbunden ist.

2. Rollo nach Anspruch 1, **dadurch gekennzeichnet, dass** die Spiralfedern (24) gleichzeitig zur Führung des Rollos (10) in einer Führungsschiene (14) dienen.

3. Rollo nach einem der vorhergehenden Ansprüche, **dadurch gekennzeichnet, dass** die Wickelwelle (26) eine Hohlwelle ist und eine starre Lagerachse (30) umgibt.

4. Rollo nach Anspruch 3, **dadurch gekennzeichnet, dass** zwischen der Lagerachse (30) und der Wickelwelle (26) ein Schrumpfschlauch (34) aus Kunststoff vorgesehen ist.

5. Rollo nach Anspruch 3 oder 4, **dadurch gekennzeichnet, dass** ein Federelement (32) vorgesehen ist, welches die Wickelwelle (26) relativ zur Lagerachse (30) in Umfangsrichtung beaufschlagt.

6. Rollo nach Anspruch 5, **dadurch gekennzeichnet, dass** das Federelement (32) eine Schraubenfeder ist, die sich zwischen der Wickelwelle (26) und der Lagerachse (30) erstreckt, wobei die Wickelwelle (26) und die Lagerachse (30) jeweils drehfest mit einem axialen Federende der Schraubenfeder verbunden sind.

7. Rollo nach einem der Ansprüche 3 bis 6, **dadurch gekennzeichnet, dass** sich das Federelement (32) in einer Querrichtung (22) des Rollos (10) im Wesentlichen über die gesamte Länge der Wickelwelle (26) erstreckt.

8. Rollo nach einem der Ansprüche 3 bis 7, **dadurch gekennzeichnet, dass** die Wickelwelle (26) ein Wellrohr und die Lagerachse (30) ein bogenförmig gekrümmtes Metallrohr ist.

## Claims

1. A roller blind for a sliding roof system, comprising
a flexible material (13) which can at least partly cover a roof opening (7), and
two coil springs (24) which extend in a longitudinal direction (11) of the roller blind (10), are firmly connected with the longitudinal edges (16) of the flexible material (13), and seek to contract to form a coil,
**characterized in that** a spring-loaded winding shaft (26) is provided which extends transversely to the longitudinal direction (11) continuously from one longitudinal edge (16) of the flexible material (13) to an opposite longitudinal edge (16) of the flexible material (13) and is firmly connected with a transverse edge (28) of the flexible material (13).

2. The roller blind according to claim 1, **characterized in that** the coil springs (24) at the same time serve to guide the roller blind (10) in a guide rail (14).

3. The roller blind according to either of the preceding claims, **characterized in that** the winding shaft (26) is a hollow shaft and surrounds a rigid bearing shaft (30).

4. The roller blind according to claim 3, **characterized in that** a heat-shrink tube (34) made from plastic is provided between the bearing shaft (30) and the winding shaft (26).

5. The roller blind according to claim 3 or 4, **characterized in that** a spring element (32) is provided which acts upon the winding shaft (26) relative to the bearing shaft (30) in the circumferential direction.

6. The roller blind according to claim 5, **characterized in that** the spring element (32) is a helical spring which extends between the winding shaft (26) and the bearing shaft (30), the winding shaft (26) and the bearing shaft (30) each being connected for joint rotation with one axial spring end of the helical spring.

7. The roller blind according to any of claims 3 to 6, **characterized in that** the spring element (32) extends substantially over the entire length of the winding shaft (26) in a transverse direction (22) of the roller blind (10).

8. The roller blind according to any of claims 3 to 7, **characterized in that** the winding shaft (26) is a corrugated tube and the bearing shaft (30) is an arcuately curved metal tube.

## Revendications

1. Store pour un système de toit ouvrant, présentant
un matériau flexible (13) apte à recouvrir au moins en partie une ouverture de toit (7), et
deux ressorts spiraux (24) qui s'étendent dans une direction longitudinale (11) du store (10), qui sont reliés de manière solidaire aux bords longitudinaux (16) du matériau flexible (13), et qui tentent de se contracter en une spirale,
**caractérisé en ce qu'**il est prévu un arbre d'enroulement (26) sollicité par ressort qui s'étend transversalement à la direction longitudinale (11) de manière continue d'un bord longitudinal (16) du matériau flexible (13) vers un bord longitudinal (16) opposé du matériau flexible (13), et qui est relié de manière solidaire à un bord transversal (28) du matériau flexible (13).

2. Store selon la revendication 1, **caractérisé en ce que** les ressorts spiraux (24) servent en même temps au guidage du store (10) dans un rail de guidage (14).

3. Store selon l'une des revendications précédentes, **caractérisé en ce que** l'arbre d'enroulement (26) est un arbre creux et entoure un axe de palier (30) rigide.

4. Store selon la revendication 3, **caractérisé en ce qu'**il est prévu un tube thermorétractable (34) en matière plastique entre l'axe de palier (30) et l'arbre d'enroulement (26).

5. Store selon la revendication 3 ou 4, **caractérisé en ce qu'**il est prévu un élément ressort (32) qui sollicite l'arbre d'enroulement (26) dans le sens périphérique par rapport à l'axe de palier (30).

6. Store selon la revendication 5, **caractérisé en ce que** l'élément ressort (32) est un ressort hélicoïdal qui s'étend entre l'arbre d'enroulement (26) et l'axe de palier (30), l'arbre d'enroulement (26) et l'axe de palier (30) étant chacun reliés de manière solidaire en rotation à une extrémité de ressort axiale du ressort hélicoïdal.

7. Store selon l'une des revendications 3 à 6, **caractérisé en ce que** l'élément ressort (32) s'étend selon un sens transversal (22) du store (10) sensiblement sur toute la longueur de l'arbre d'enroulement (26).

8. Store selon l'une des revendications 3 à 7, **caractérisé en ce que** l'arbre d'enroulement (26) est un tube ondulé et l'axe de palier (30) est un tube métallique recourbé de manière arquée.
